# EUROPEAN PATENT APPLICATION

(11) **EP 2 660 340 A1**
(43) Date of publication of application: **06.11.2013**
(21) Application number: 13002370.8
(22) Date of filing: 03.05.2013
(51) Int. Cl.: C21D 1/06, C21D 1/10, C21D 1/18, C21D 1/42, C23C 8/20, C23C 8/22, C23C 8/30, C23C 8/32

(54) **Method of thermal treatment for steel elements**

(30) Priority: 04.05.2012 IT MI20120755
(71) Applicant: Cicsa S.r.l., 23883 Brivio (LC) (IT)
(72) Inventor: Campanari, Stefano, 23883 Brivio (LC) (IT); Campanari, Enrico, 23883 Brivio (LC) (IT); Campanari, Marco, 23883 Brivio (LC) (IT)
(74) Representative: Marietti, Andrea

(57) **Abstract**

A method of thermal treatment for increasing the hardness, at least localized, of steel elements is described, in which the steps of carburizing or carbonitriding, tempering and induction hardening are present in sequence.

## Description

### FIELD OF THE INVENTION

The present invention relates to a method of thermal treatment for steel parts. In particular, it relates to a method of thermal treatment for increasing the hardness, at least localized, of steel elements.

### BACKGROUND ART

In several sectors of the technics, but especially in the field of the mechanical constructions, many components or elements are subjected to wear issues combined with relevant mechanical stresses, in particular tensile and/or bending and shear loads.

For example, in the field of the machines for the transportation or machining of bulk materials, there are several mechanical components subjected to mechanical stresses and to wear especially in parts subjected to wiping at the contacting points with other mechanical elements or with the transported material. In particular, components of the chains used in the transportation machines, such as links for ring chains, links for plate chains, joints and accessories for connecting said chains one to each other and for connecting to said chains other elements, such as for example, cups or scraping elements, are subjected to wear.

Steels subjected to thermal treatments acquire, modify or improve some mechanical and technological characteristics. Hardening, tempering, induction hardening, carburizing and carbonitriding are few from among the employed main thermal treatments.

The "hardening" is carried out by heating the steel up to temperatures of 760 - 870°C (higher than the temperature of total formation of austenite, generally named transformation temperature Ac3) and then by cooling it down quickly (for example by immersion in liquids such as water or hardening oils) such that the sudden cooling down gives hardness and high mechanical strength due to the formation of martensite. However, such a process generates internal stresses in the metal, which make it more brittle. On the other side these hardening defects can be eliminated by the "tempering" which consists in heating again the steel at lower temperatures (for example 400 - 600°C) for times that are long enough, then cooling it down again (in this case without the need of a rapid cooling down) until room temperature. The tempering reduces the steel hardness and increases its ductility and toughness. The sequence of hardening - tempering has the name of "quenching and tempering" process.

"Induction hardening" is a particular type of hardening, which has the aim of hardening the surface of mechanical pieces with thicknesses having equivalent depth. The treatment can be applied to untreated pieces or to pieces already subjected to quenching and tempering. In this type of process, the steel piece placed inside an alternated electromagnetic field with convenient frequency, warms up by Joule effect in the surface layers due to the currents induced in the metal, up to the temperatures required by the hardening process. The thickness of the heated layer varies with the current frequency besides depending on electrical conductivity and magnetic permeability of the material. Low, middle and high frequency generators are industrially used and the layer of material concerned by the heating depends on the generated frequency. At the end of the heating, the piece is quickly cooled down for example by a jet of water, obtaining the formation of martensite and increasing the hardness of the surface layers that have been hardened. The treatment is generally completed by a subsequent low temperature (for example 130 - 220°C) tempering or stress relieving.

With respect to the conventional treatments carried out in an oven, the induction hardening has the possibility of being localized, i.e. of treating specific surface regions of a component having any geometry, thus avoiding thermal variations of the whole volume. Therefore this treatment can be localized in the regions of the piece to which higher wear strength has to be provided, where high hardness is reached with values essentially related to the carbon content of the piece and to the martensite percent obtained with the treatment, whereas the remaining parts preserve a lower hardness and a high toughness. The subsequent low temperature tempering or stress relieving can be carried out locally or on the whole piece, by induction or by an oven for thermal treatment. In the majority of the applications, the induction hardening is applied on steels with carbon content lower than 0.5%, in order to preserve good toughness of the areas not induction-hardened, obtaining a maximum surface hardness close to 60 HRC on regions subjected to induction hardening.

The "case hardening" or "carburizing" consists of two main steps. The first one consists of a carbon enrichment of the piece surface, usually by means of carbon diffusion starting from a convenient gas atmosphere formed in proper ovens, through a process carried out at temperatures generally comprised between 880 and 980°C, for time lengths of several hours or tens of hours depending on the enrichment depth to be reached. The second step consists in a subsequent hardening (that is to say rapid cooling down with a convenient liquid or gaseous hardening means) which provides a high surface strength with an optimum wear strength, whereas the low carbon content of the core allows high toughness values in the underlying mass. The carburizing has the advantage of allowing to reach very high hardness on the whole surface of the treated pieces (except for the application of rather expensive and complex to coat paints, which prevent the treatment from occurring in specific regions), obtaining surface hardness values in the field of 62 - 65 HRC, in the presence of a surface carbon content in the carburized material close to 0.8% and in conditions of full transformation of the surface layers of the piece into martensite; with respect to the induction hardening processes it has the disadvantage of giving rise to pieces globally characterized by higher brittleness.

The "carbonitriding" is a thermo-chemical process of surface hardening similar to the carburizing, but carried out at slightly lower temperatures (850 - 900°C), consisting of a carbon and nitrogen surface diffusion treatment from gas atmosphere followed by a stress- relieving tempering. The addition of nitrogen to the metal matrix allows reaching very high hardness (over 65 HRC) in the outward region of the piece, limited to few tenths of mm. Hardness values similar to the carburizing values are reached under this region. This process also provides very high hardness to the whole surface of a piece, and, with respect to the induction hardening processes, it has the disadvantage of providing pieces globally characterized by higher brittleness. Traditionally many types of components for mechanical applications, such as for example the chain links, the joints and the accessories (according to their applications), are made with a standardized steel for quenching and tempering, that is to say a steel to be subjected to hardening followed by tempering at about 500 - 600°C. These steels can be locally hardened with induction hardening processes too, in which case they are subjected to the above mentioned classical thermal treatments according to the sequence: hardening, tempering and induction hardening, or just induction hardening, followed by final tempering. Alternatively, many types of components for mechanical applications such as for example the chain links, the joints and the accessories (according to their applications) are traditionally made with a carburizing, or carbonitriding, standardized steel, in which case they are subjected to the above mentioned classical thermal treatments according to the sequence: carburizing or carbonitriding, followed by stress relieving or tempering. However, the conventional method does not allow to obtain the extremely high surface hardness, characteristic of the carburizing or carbonitriding processes, limitedly to well defined areas or regions which is a characteristic of the induction hardening process, and at the same time a high toughness in the whole treated steel piece. Object of the present invention is to provide a method of thermal treatment for increasing the hardness, at least localized, of steel elements.

Another object of the present invention is to provide a method of thermal treatment which provides high hardness to a steel piece in the wear regions, combined with high toughness and mechanical strength in the other regions.

### SUMMARY OF THE INVENTION

These and other objects are reached by the present invention by a method of thermal treatment for increasing the hardness, at least localized, of steel elements characterized by comprising in sequence at least the following steps of:
(a) Carburizing or carbonitriding, preferably of the whole steel element;
(b) Tempering, preferably at middle - high temperature and preferably of the whole steel element;
(c) Induction hardening, preferably localized on at least one portion/ region of the steel element.

According to an advantageous aspect of the present invention a steel piece subjected, at least in the highest worn areas, to an initial carburizing or carbonitriding step, followed by tempering and subsequently induction hardening, reaches a higher surface hardness in said areas rather than in the others.

According to a preferred aspect of the method according to the present invention, the induction hardening step is followed by a stress relieving, or tempering, step at low temperature comprised preferably between 130° and 220°C; whereas the afore said tempering step, subsequent to the carburizing or carbonitriding step, is preferably carried out at a middle-high temperature, meaning a temperature comprised between 400° and 650° and preferably at a temperature comprised between 500° and 600°C. According to a characteristic aspect of the present invention, the method according to the present invention provides that the high temperature tempering occurs on the whole steel element via stay in a thermal treatment oven for conveniently long times (1 - 6 hours).

According to a characteristic aspect of the present invention, the method according to the present invention is carried out on a steel for quenching and tempering (of the type standardized preferably according to the European Standard EN 10083: 2006). According to another characteristic aspect of the present invention, the steel surface carbon content, obtained by said carburizing or carbonitriding according to step a), is comprised between 0.5% and 1.0%, more preferably between 0.6% and 0.9% according to the type of starting steel and the intended use.

According to still another characteristic aspect of the present invention, said induction hardening according to step (c) is of the localized type, that is to say it is carried out on at least one portion of the steel elements, more preferably it is carried out in the regions of largest wear of such elements.

Therefore, according to an aspect of the method of the present invention, a first carburizing or carbonitriding step is applied to the piece made of standardized steel for quenching and tempering, then a tempering step, similar to the quenching and tempering step, and, finally, an induction hardening step in the wear regions.

In the preferred embodiment of the present invention, the treatment is applied to steels or iron alloys which can receive a quenching and tempering treatment, that are characterized by carbon content preferably comprised between 0.18 and 0.45% and preferably by the presence of bonding elements such as Mn, Ni, Cr, Mo in percentages individually comprised between 0 and 5%, coherent with typical compositions of standardized steels as steels for quenching and tempering. A first carburizing is applied to the piece, then it is applied a middle-high temperature tempering (400 - 650°C, preferably 500 - 600°C) similar to that of a quenching and tempering treatment and, finally, in the regions subjected to wear, it is applied a localized induction hardening.

With respect to a treatment of just quenching and tempering followed by induction hardening, with the treatment according to the invention, a much higher hardness is obtained in the wear regions of the pieces, the carbon content of the piece being increased and the martensite percent produced during the final treatment step being locally increased. In fact, the surface carbon content can increase up to values characteristic of carburizing, and the locally reached final hardness too. However, the treatment allows keeping high mechanical strength in the other regions of the piece, where the induction hardening of the piece is not applied and the hardness is that obtained in the prior intermediate tempering step.

With respect to a carburizing treatment, with the treatment according to the invention, a localized effect can be obtained, leaving the areas not subjected to induction hardening at lower hardness values, but with higher toughness and subsequent positive effect on the piece strength against mechanical stresses, such as for example the tensile strength in case of metal chain elements.

### DETAILED DESCRIPTION OF SOME EMBODIMENTS OF THE PRESENT INVENTION

Further advantages and characteristics of the present invention will be evident from the following description, made with reference to the accompanying tables for illustration purposes only and without limitation, wherein:
- table 1 shows the surface and core hardness values obtained on a piece of 39NiCrMo3 (EN10083:2006) steel for quenching and tempering with a conventional treatment (quenching and tempering in addition to induction hardening with low temperature final stress relieving) and with the treatment according to the invention (carburizing, tempering, induction hardening with low temperature final stress relieving);
- table 2 shows the surface and core hardness values obtained on a piece of 23MnNiCrMo54 (DIN17115) steel with a conventional treatment (quenching and tempering in addition to induction hardening) and with the treatment according to the invention (carburizing, tempering, induction hardening with low temperature final stress relieving).

With the term "surface hardness", the hardness measured with Rockwell C (UNI EN ISO 6508) method is intended.

With the term core hardness, the hardness measured with the same method at the center of a section of the treated piece is intended.

The thermal treatment according to the invention provides that a sensible increase of surface carbon content is initially carried out on the steel piece, from about 0.3% to 0.5 - 1.0%, and preferably 0.7 - 0.9%, by carburizing or carbonitriding. Subsequently the piece is tempered at middle - high temperatures comprised between 400° and 650°C, preferably between 500° and 600°C. The piece is then subjected to induction hardening preferably just in some areas or regions of the piece more subjected to wear, such as in case of the contacting points between subsequent links of a chain or between links and accessories or other connecting elements.

Such a tempering operation, according to a particular aspect of the present invention, can be carried out via stay of the steel element in a proper oven for thermal treatment for a time interval selected between 1 hour and 6 hours.

Note that the use of an induction hardening process allows obtaining a steel element provided with just one or more regions, selected by the designer, wherein such hardening type is carried out, thus obtaining high surface hardness localized in such one or more regions. In this way a steel element in its entirety, such as for example a link of a chain, can be subjected to carburizing or carbonitriding treatment followed by high or middle temperature tempering, and then only some regions of such a steel element, for example the inner throats of a chain link, can be subjected to an induction hardening treatment.

According to a preferred aspect of the present invention the piece is subsequently subjected to stress relieving, that is a low temperature, for example comprised between 130° and 220°C, tempering. Such a stress relieving operation can concern the whole workpiece or else, according to a particular aspect of the present invention, it can be localized on that region of the metal element subjected to induction hardening.

As mentioned, it should be noted that the thermal treatment according to the present invention can be applied, with optimal results of localized hardness, in particular, on standardized steels for quenching and tempering (EN 10083), thus obtaining elements having high hardness, at least localized,, and thus significant wear strength, with considerable economic savings.

If the element to be subjected to the thermal treatment in order to increase the hardness, at least localized, would be a link, for example of elongated annular type, or else an accessory, of a metal chain, the results obtained by employing a steel for quenching and tempering shown to be optimal.

### EXAMPLES

Two steel types, 39NiCrMo3 (UNI EN 10083 - 3) and 23MnNiCrMo54 (DIN 17115), have been used for example purposes for implementing mechanical pieces subjected to hardness measurements, whose results on Rockwell C scale, are reported in table 1 and table 2.

**Table 1**

| 39NiCrMo3 steel | Surface hardness (HRC) inductionhardening regions | Surface hardness (HRC) without induction hardening regions | Core hardness (H RC) |
|---|---|---|---|
| Quenching + induction hardening conventional treatment | 52 - 57 (+HL type) | 38-48 (1) | 34-44 (1,2) |
| | 55 - 60 (+HH type) | | |
| Treatment according to the invention | 62-65 | 38-48 (1) | 34-44 (1.2) |
| (1) with tempering temperatures between 400 and 550°C | | | |
| (2) for cylindrical pieces with diameter up to 40 mm | | | |

In table 1 are reported the surface hardness and core hardness values on Rockwell scale obtained on a piece made of 39NiCrMo3 type steel (UNI EN 10083 - 3) as a consequence of a conventional treatment (quenching and tempering and subsequent local induction hardening) and of a treatment according to the invention. In particular, are reported surface hardness values relating to the piece regions subjected to induction hardening and to the regions in which the induction hardening has not been carried out.

The value presently considered as a limit value of surface hardness for 39NiCrMo3 steel pieces subjected to conventional thermal treatment is 60 HRC.

According to the data of table 1 for a 39NiCrMo3 steel, in the regions subjected to induction hardening according to the treatment of the present invention, a surface hardness of 62 - 65 HRC is obtained with respect to values such as 52 - 57 HRC for HL steel and 55 - 60 HRC for HH steel, which are always lower than the so called limit value of 60 HRC. Consider that for "HL steel" and "HH steel" the subclasses of 39NiCrMo3 material provided by standard EN 10083 - 3, characterized by lower or higher hardenability, are intended. In the regions not subjected to induction hardening the surface hardness, for both the conventional treatment and the treatment according to the invention, is the same and is 38 - 48 HRC in view of the afore mentioned tempering temperatures comprised between 400 and 550°C.

**Table 2**

| 23MnNiCrMo54 steel | Surface hardness (HRC) inductio n hardening regions | Surface hardness (HRC) without induction hardening regions | Core hardness (HRC) |
|---|---|---|---|
| Quenching + induction hardening conventional treatment | 45-53 | 35-41 (1) | 32-38 (1.2) |
| Treatment according to the invention | 62-65 | 35-41 (1) | 32-38 (1.2) |
| (1) with tempering temperatures between 400 and 550°C | | | |
| (2) for cylindrical pieces with diameter up to 40 mm | | | |

Similarly, the surface hardness and core hardness values on Rockwell scale obtained on a piece made of a 23MnNiCrMo54 (DIN 17115) type steel are reported in table 2, as a consequence of a conventional treatment (quenching and tempering and subsequent local induction hardening) and of a treatment according to the invention. In particular, the surface hardness values are reported relatively to the piece regions subjected to induction hardening and the regions in which the induction hardening has not been carried out.

The value presently considered as a limit value of surface hardness for 23MnNiCrMo54 steel pieces subjected to conventional thermal treatment is 53 HRC. According to the data of table 2, for a 23MnNiCrMo54 steel, in the regions subjected to induction hardening according to the treatment of the present invention, a surface hardness of 62 - 65 HRC is obtained with respect to hardness values of 45 - 53 HRC, thus clearly exceeding the limit value of 53 HRC. In the regions not subjected to induction hardening the surface hardness, for both the conventional treatment and the treatment according to the invention, is the same and is 35 - 41 HRC in view of the afore mentioned tempering temperatures comprised between 400 and 550°C. Hardness values close to 65 HRC and however widely higher than the limit value of 53 HRC, are a very surprising result for the referenced steel. In fact said surface hardness values allow very relevant improvements in wear strength, taking into account that results in use, in particular as regard to the abrasion strength, improve much more than linearly as a function of the hardness and thus even the small obtained variations in the hardness values provide the steel pieces treated according to the method of the present invention with technical and strength characteristics higher than the conventional method. In particular, the surface hardness obtained according to the method of the present invention is high in well-defined areas or regions, while the piece shows a high toughness in all other regions.

Summarizing, the method of thermal treatment for increasing the hardness, at least localized, of steel elements according to a preferred aspect of the present invention, comprising in sequence the following steps of:
(a) Carburizing or carbonitriding (for obtaining preferably a content of steel surface carbon comprised between 0.5% and 1.0% and more preferably comprised between 0.7% and 0.9%) preferably applied to the whole steel element;
(b) Tempering at middle - high temperature (similar to a quenching and tempering step, with temperatures comprised between 400° and 650°C) preferably applied to the whole steel element;
(c) Induction hardening, preferably localized at those portions of the steel element which need higher surface hardening for resisting, for example, to wear up to a greater degree;
   preferably followed by a step of:
(d) Stress relieving (that is tempering at low temperature, comprised between 130° and 220°C);
   allows to obtain steel pieces with hardness, at least localized, higher than the conventional thermal treatments known in the art.

Note that, according to a preferred aspect of the present invention, the step of (b) tempering the workpiece at middle - high temperature is carried out by means of stay in an oven for thermal treatment for times comprised between 1 and 6 hours. According to another preferred aspect of the present invention, the step (d) of stress relieving can be carried out only locally, in correspondence to the region subjected to localized induction hardening (under the hypothesis that such an induction hardening has concerned only one region of the metal workpiece) or on the whole metal element, and it can be realized through long stays in oven (for example for times comprised between 1 and 6 hours).

In particular, the method of thermal treatment of the present invention can be advantageously applied to standardized steels for quenching and tempering (EN 10083), with results of surface hardness higher than those of surface hardness which can be obtained with the conventional quenching and tempering thermal treatments followed by induction hardening, in use for this type of materials.

The treatment according to the invention can be preferably carried out on elements of metal chains or accessories for making metal chains. In particular, it can be carried out on contacting areas between two or more elements or between accessories and elements of a metal chain.

For example, in case of metal chains with annular links, with substantially elliptic shape, the thermal treatment object of the present invention can be carried out in those curved inner regions (throats) of each link, in which the contact between subsequent chain links is present.

Similarly, in case of accessories inserted in such a type of chain, the relevant regions subjected to engagement respectively with the subsequent link and with the previous link in the metal chain can be subjected to the afore described thermal treatment for increasing the hardness, at least localized.

Various modifications can be made to the herein depicted embodiments without departing from the scope of the present invention.

## Claims

1. Method of thermal treatment for increasing the hardness, at least localized, of steel elements, **characterized by** comprising in sequence at least the steps of:
(a) Carburizing or carbonitriding;
(b) Tempering;
(c) Induction hardening.

2. Method of thermal treatment for increasing the hardness, at least localized, of steel elements according to claim 1, **characterized by** comprising, subsequently to said step of (c) induction hardening, a step of (d) stress relieving.

3. Method of thermal treatment for increasing the hardness, at least localized, of steel elements according to claim 2, **characterized in that** said step of (c) stress relieving is carried out at a temperature selected in the range 130° - 220°C.

4. Method of thermal treatment for increasing the hardness, at least localized, of steel elements according to any one of the preceding claims, **characterized in that** said step of (b) tempering is carried out at a middle - high temperature selected in the range 400° - 650°C, and preferably selected in the range 500° - 600°C.

5. Method of thermal treatment for increasing the hardness, at least localized, of steel elements according to any one of the preceding claims, in which said step of (b) tempering is carried out by stay in a thermal treatment oven for times comprised between I and 6 hours.

6. Method of thermal treatment for increasing the hardness, at least localized, of steel elements according to any one of the preceding claims, in which said elements are made of steel for quenching and tempering.

7. Method of thermal treatment for increasing the hardness, at least localized, of steel elements according to any one of the preceding claims, **characterized in that** the carbon surface content of the steel obtained by said carburizing or carbonitriding according to step (a) is comprised between 0.5% and 1.0%, and more preferably comprised between 0.7% and 0.9%.

8. Method of thermal treatment for increasing the hardness, at least localized, of steel elements according to anyone of the preceding claims, in which:
● said step of (a) carburizing or carbonitriding is carried out on the whole steel element;
● said step of (b) tempering is carried out on the whole steel element; and
● said step of (c) localized induction hardening is carried out on at least one portion of the steel element.

9. Element for making metal chains **characterized by** comprising at least one area subjected to a thermal treatment for increasing the hardness, at least localized, according to at least one of claims 1 to 8.

10. Element for making metal chains according to claim 9, **characterized in that** said treatment is carried out at least on contacting areas between two or more of said elements.

11. Accessory for metal chains **characterized by** comprising at least one area subjected to a thermal treatment for increasing the hardness, at least localized, according to any one of claims 1 to 8.

12. Accessory for metal chains according to claim 11 **characterized in that** said treatment is carried out at least on the contacting areas between said at least one accessory and said at least one element.
